# EUROPEAN PATENT APPLICATION

(11) **EP 1 992 852 A1**
(43) Date of publication of application: **19.11.2008**
(21) Application number: 07831873.0
(22) Date of filing: 08.11.2007
(51) Int. Cl.: F16K 17/30

(54) **CONSTANT FLOW RATE VALVE**

(30) Priority: 08.11.2006 JP 2006302983
(71) Applicant: Asahi Organic Chemicals Industry Co., Ltd., Nobeoka-shi, Miyazaki 882-8688 (JP)
(72) Inventor: HANADA, Toshihiro, Nobeoka-shi Miyazaki 882-8688 (JP); NASU, Keio, Nobeoka-shi Miyazaki 882-8688 (JP)
(74) Representative: Patentanwälte Ruff, Wilhelm, Beier, Dauster & Partner
(86) International application number: PCT/JP2007/072143
(87) International publication number: WO 2008/056823

(57) **Abstract**

An object of the present invention is to provide a constant flow valve able to make the flow rate constant at all times even if the upstream and downstream side fluid pressure of the valve fluctuates for a large flow rate fluid and able to set the flowing fluid to any flow rate.

The main body according to the constant flow valve according to the present invention has a valve seat at a peripheral edge of a ceiling surface opening provided at said cylinder part ceiling surface, said piston has a valve element corresponding to said valve seat and a flange, said flange divides said cylinder part into a first valve chamber communicating with said first channel and a second valve chamber from which said valve seat is exposed, a clearance channel is formed in a clearance between said flange outer circumference and said cylinder part inner circumference, and an upward and downward motion of said piston causes a channel area between said valve element and said valve seat to change whereby a fluid pressure of said second valve chamber is controlled.

## Description

### TECHNICAL FIELD

The present invention relates to a constant flow value used for fluid transport piping in chemical plants, semiconductor production, food processing, biotech, and various other industries, more particularly relates to a constant flow valve of a large size for a large flow rate fluid enabling a constant flow rate at all times even if upstream side and downstream side fluid pressures of the valve fluctuate and enabling the flowing fluid to be set to any flow rate.

### BACKGROUND ART

Various constant flow valves have been proposed in the past. As one of these, there is the constant flow valve shown in FIG. 8 (for example, see Japanese Patent Publication (A) No. 5-99354 (FIG. 5)). This structure provides a diaphragm chamber 105 by a valve seat 102 provided in the middle of a channel 101 and a diaphragm 104 having a valve element 103 facing it, causes a force to act on the diaphragm 104 in the valve opening direction through a spring 106, and provides a communicating path 107 in the diaphragm 104 so as to make a first side fluid flow into the diaphragm chamber 105.

Due to this, the fluid flowing in from the first side presses the diaphragm 104 in the valve closing direction, is reduced in pressure at the communicating path 107, and enters the diaphragm chamber 105. The fluid flowing into the diaphragm chamber 105 presses the diaphragm 104 in the valve opening direction, is reduced in pressure when passing through a fluid control part 108 between the valve seat 102 and valve element 103 of the diaphragm 104, and flows out to the outlet side. Further, the difference between the force acting on the diaphragm 104 in the valve closing direction and the force in the valve opening direction is in a state balanced with the spring 106 biasing the diaphragm 104 in the valve opening direction.

For this reason, if the fluid pressure at the first side increases or the fluid pressure at the outlet side decreases, the force acting on the diaphragm 104 in the valve closing direction increases, the channel area of the fluid control part 108 decreases, and the fluid pressure of the diaphragm chamber 105 is increased. Due to this, the force acting on the diaphragm 104 in the valve opening direction also increases and the difference in the forces acting on the diaphragm 104 in the valve closing direction and the valve opening direction again balances with the force of the spring 106.

On the other hand, if the fluid pressure at the inlet side decreases or the fluid pressure at the outlet side increases, the channel area of the fluid control part 108 increases, so again the difference in the forces acting on the diaphragm 104 in the valve closing direction and valve opening direction balances with the force of the spring 106.

Therefore, the difference of the inlet side fluid pressure acting on the diaphragm 104 and the fluid pressure of the diaphragm chamber 105 is held constant, so the differential pressure before and after the communication path 107 becomes constant and the flow rate can be held constant.

### DISCLOSURE OF THE INVENTION

However, when desiring to control a large flow rate, the above conventional constant flow valve requires that the constant flow valve be made large in size and that the size of the diaphragm 104 also be designed large, but due to the large size, the force received by the diaphragm 104 due to the fluid pressure becomes larger. Therefore, with a membrane thickness the same as the case of a small size, the fluid pressure is liable to cause the diaphragm 104 to break. Further, if the membrane thickness is made greater, the strength of the diaphragm 104 will rise, but the action of the diaphragm 104 will become poorer, so there was the problem that the precision and response of the fluid control dropped. Further, to change the spring 106 to one with a different strength, the valve had to be disassembled, so it there was the problem that it was difficult to change the biasing force by the spring 106 to change the differential pressure before and after the communication path 107 and therefore it was difficult to change the setting of the flow rate after the constant flow valve was installed in piping.

The present invention was made in consideration of the problem points of the prior art described above and has as its object the provision of a constant flow valve of a large size for a large flow rate fluid enabling a constant flow rate at all times even if an upstream side and downstream side fluid pressure of the valve fluctuates and enabling the flowing fluid to be set to any flow rate.

Explaining the configuration of the constant flow valve of the present invention for achieving the above object with reference to the drawings, there is provided a constant flow valve provided with a main body provided with a cylinder part, a first channel communicating from a first opening to said cylinder part, and a second channel communicating from said cylinder part to a second opening and a piston accommodated in said cylinder part, said constant flow valve characterized in that said main body has a valve seat at a peripheral edge of a ceiling surface opening provided at said cylinder part ceiling surface, said piston has a valve element corresponding to said valve seat and a flange, said flange divides said cylinder part into a first valve chamber communicating with said first channel and a second valve chamber from which said valve seat is exposed, a clearance channel is formed in a clearance between said flange outer circumference and said cylinder part inner circumference, and an upward and downward motion of said piston causes a channel area between said valve element and said valve seat to change whereby a fluid pressure of said second valve chamber is controlled, as a first aspect.

Further, the valve is further provided with a biasing means for biasing said piston upward by a predetermined force and a biasing means for biasing said piston downward by a predetermined force, as a second aspect.

Further, a bottom part of said piston at the center part of which said flange is formed is provided with a first diaphragm part extending in said cylinder part outer diameter direction, and there is a first pressurizing chamber formed by an inner surface of a recess provided in a top surface of a base provided at the bottom part of said main body and a bottom surface of said first diaphragm part, as a third aspect.

Further, a top part of said piston at the center part of which said flange is formed is provided with a second diaphragm part extending in said cylinder part outer diameter direction, and, below said second diaphragm part, there is a third valve chamber communicating from said ceiling surface opening to said second channel, and there is a second pressurizing chamber formed by an inner surface of a recess formed in a bottom surface of a lid provided at a top part of said main body and a top surface of said second diaphragm part, as a fourth aspect.

Further, above said second diaphragm part, a third diaphragm part extending in said cylinder part outer diameter is provided, and said second pressurizing chamber is divided by said third diaphragm part into an air chamber formed between a top surface of said second diaphragm part and a bottom surface of said third diaphragm part and a pressurizing chamber formed by a top surface of said third diaphragm part and an inner surface of a recess provided in a bottom surface of said lid, as a fifth aspect.

Further, said biasing means is a spring or pressurized fluid, as a sixth aspect.

Furthermore, at least part of a ceiling surface of said cylinder part is formed into a tapered surface, as a seventh aspect.

The constant flow valve of the present invention has the above such structures. By use of the same, the following superior effects are obtained:
(1) The part used for receiving the fluid pressure and controlling the fluid is not a diaphragm, but a piston, so it is possible to obtain a constant flow rate at all times with a good precision and response of fluid control in particular in a large size constant flow valve for a large flow rate.
(2) Even if the upstream side or downstream side fluid pressure of the fluid flowing through the constant flow valve changes, it is possible to obtain a constant flow rate at all times.
(3) By adjusting the force biasing the biasing means, it is possible to set the fluid flowing through the constant flow valve at any flow rate.
(4) By dividing the inside of the pressurizing chamber divided by the second diaphragm part by a third diaphragm part with a pressure receiving area larger than the pressure receiving area of the second diaphragm part, even if the pressure of the fluid flowing through the constant flow valve is high, the pressurized fluid supplied to the pressurizing chamber can operate at a low pressure to control the fluid and therefore fluid control over a wide range of fluid pressures becomes possible.
(5) If providing the ceiling surface of the cylinder part with a tapered surface, the fluid flows around the outer circumference of the piston, so it is possible to keep the stagnation of the fluid to a minimum and possible to suppress deterioration of water quality.
(6) By the biasing means not contacting the fluid and being completely isolated from the fluid, it is possible to suppress elution of metal from the biasing means and formation of particles.

Below, the present invention will be more fully understood from the attached drawings and the description of the preferred embodiments of the present invention.

### BRIEF DESCRIPTION OF THE DRAWINGS

FIG. 1 is a vertical cross-sectional view showing a first embodiment of a constant flow valve of the present invention.
FIG. 2 is a disassembled view of the constant flow valve of FIG. 1.
FIG. 3 is a vertical cross-sectional view showing the state where the fluid control part of the constant flow valve of FIG. 1 is made narrower.
FIG. 4 is a vertical cross-sectional view showing a second embodiment of a constant flow valve of the present invention.
FIG. 5 is a vertical cross-sectional view showing a third embodiment of a constant flow valve of the present invention.
FIG. 6 is a vertical cross-sectional view showing a fourth embodiment of a constant flow valve of the present invention.
FIG. 7 is a vertical cross-sectional view showing a fifth embodiment of a constant flow valve of the present invention.

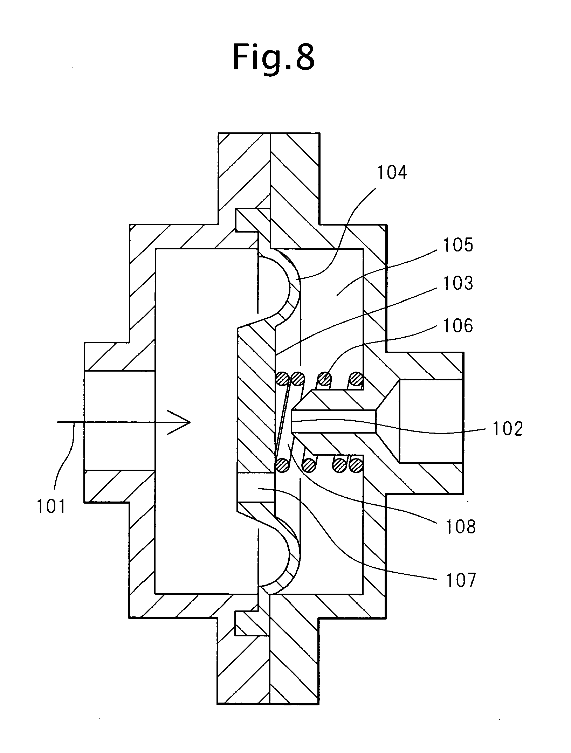

FIG. 8 is a vertical cross-sectional view showing a conventional constant flow valve.

### BEST MODE FOR CARRYING OUT THE INVENTION

Below, embodiments of the present invention will be explained with reference to embodiments shown in the drawings, but the present invention is not limited to these embodiments needless to say.

### First Embodiment

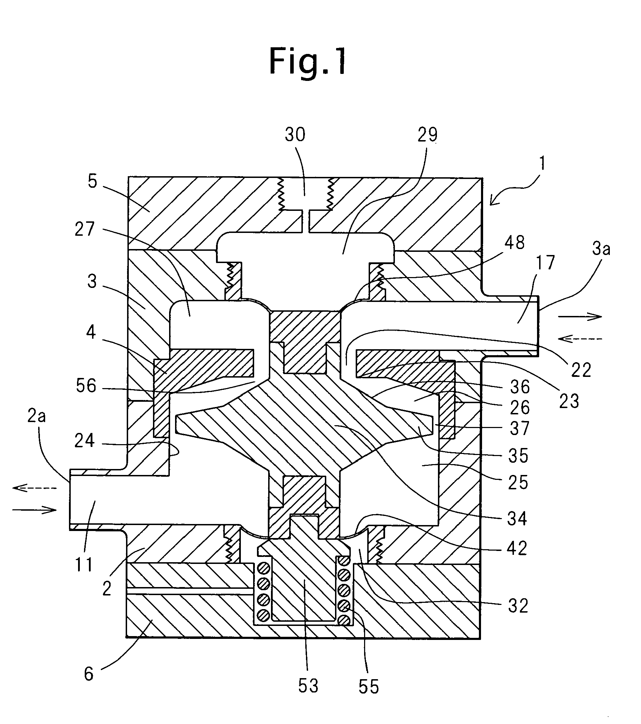

A first embodiment of a constant flow valve of the present invention will be explained based on FIG. 1 to FIG. 3.

In FIG. 1, 1 is a main body. The main body 1 is divided into, from the top, a lid 5, top body 3, center body 4, bottom body 2, and base 6 and is configured by assembly of these together. At the center of the inside of the main body 1, a cylinder part 24 communicating with a first channel 11 and a second channel 17 communicating with a ceiling surface opening 22 provided at a top surface of the cylinder part 24 are provided.

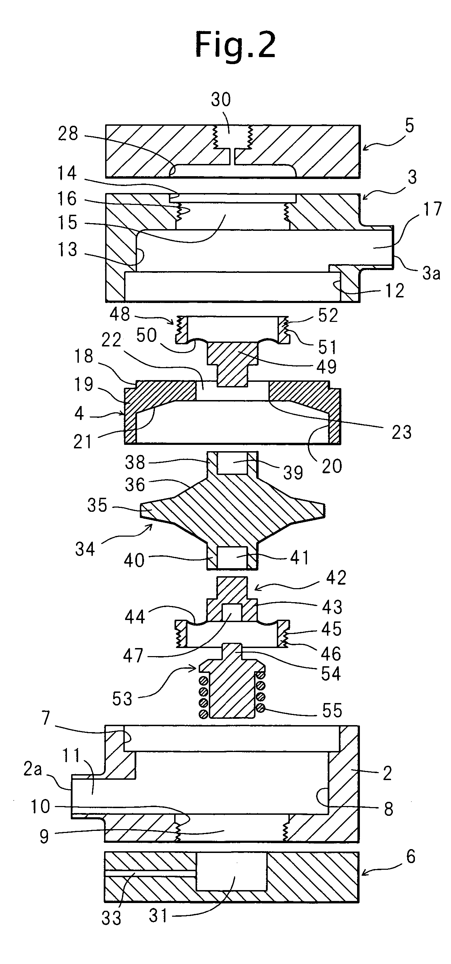

In FIG. 2, the bottom body 2 is made of PTFE. At its top part, a flat circular shaped step part 7 is provided. At the center of the step part 7, a recess 8 with a smaller diameter than the step part is provided. At the bottom part of the recess 8, a through hole 9 with a smaller diameter than the recess 8 is provided. Around the inner circumference of the through hole 9, a female thread 10 with which a later explained first diaphragm part 42 is screwed is formed. Further, a first channel 11 communicating from a first opening 2a provided in the side surface of the bottom body 2 to the recess 8 is provided.

The top body 3 is made of PTFE. At its bottom part, a flat circular shaped step part 12 of the same diameter as the step part 7 of the bottom body 2 is provided. At the center of the step part 12, a recess 13 with a smaller diameter than the step part 12 is provided. Further, at the top part, a flat circular shaped top step part 14 is provided. At the center of the top step part 14, a through hole 15 with a smaller diameter than the top step part 14 and communicating with the recess 13 is provided. At the inner circumference of the through hole 15, a female thread 16 with which a later explained second diaphragm part 48 is screwed is formed. Further, a second channel 17 communicating from a second opening 3a provided at a side surface of the top body 3 to a recess 13 is provided.

The center body 4 is made of PTFE. At the top part, an insertion part 18 of substantially the same diameter as the inside diameter of the recess 13 of the top body 3 is provided. At its outer circumference, a flange 19 of substantially the same diameter as the step parts 7, 12 is provided. At the bottom part, a recess 20 of the same diameter as the recess 8 of the bottom body 2 is provided opening at the bottom surface. The ceiling surface of the recess 20 is provided with a tapered surface 21 tapering upward. At the center of the center body 4, a ceiling surface opening 22 formed from the top surface through the recess 20 is provided. The peripheral edge of the bottom part of the ceiling surface opening 22 forms a valve seat 23. The center body 4 is gripped and fastened by the top body 3 and bottom body 2 in the state with the insertion part 18 engaged with the recess 13 of the top body 3 and the flange 19 engaged with the step part 12 and also the flange 19 engaged with the step part 7 of the bottom body 2.

At this time, the cylinder part 24 is formed by the recess 8 of the bottom body 2 and the recess 20 of the center body 4. The cylinder part 24 is divided by a flange 35 of a later explained piston 34 into a first valve chamber 25 at its bottom side and a second valve chamber 26 at its top side. Note that the inner circumference of the cylinder part 24 is smooth with no relief shapes and is formed to be parallel along the axial line in the vertical direction.

The lid 5 is made of PTFE. At the bottom part, a flat circular shaped bottom step part 28 of the same diameter as the top step part 14 of the top body 3 is provided. At the top surface of the lid 5, a ventilation port 30 communicating the top step part 14 and the outside is provided.

The base 6 is made of PTFE. At the center part, a recess 31 opening at the top surface and with a smaller diameter than a through hole 9 of said bottom body 2 is provided. At a side surface of the base 6, a small diameter breathing hole 33 communicating with the recess 31 is provided.

The above explained lid 5, top body 3, center body 4, bottom body 2, and base 6 forming the main body 1 are fastened by interposing the center body 4 between the top body 3 and bottom body 2 and fastening them by nuts and bolts (not shown).

34 is a PTFE piston accommodated in the cylinder part 24. At the center part, a flange 35 is provided. At the top of the flange 35, a conical valve element 36 is provided. At the top part of the piston 34, a top rod 38 projecting out from the valve element 36 upward is provided. At the top end of the top rod 38, a connection part 39 to which a later explained second diaphragm part 48 is connected is provided. At the bottom part of the piston 34, a bottom rod 40 projecting out downward is provided. At the bottom end of the bottom rod 40, a connection part 41 to which a later explained first diaphragm part 42 is connected is provided. Further, the outer circumference of the flange 35 is provided so as not to contact the inner circumference of said cylinder part 24 but to have a certain clearance formed with it. This clearance becomes the clearance channel 37. The channel area of the clearance channel 37 is set sufficiently smaller than the pressure receiving area of the flange 35 of the piston 34. Further, the location between the valve element 36 and said valve seat 23 where up and down movement of the piston 34 causes the channel area to change becomes the fluid control part 56. Note that the fluid control part 56 may also be formed by providing the valve element 36 in a columnar shape and providing the valve seat 23 in a tapered shape.

42 is a PTFE first diaphragm part. At the center, a columnar thick part 43 is provided. A ring shaped membrane part 44 extending from the bottom end face of the thick part 43 to the outer diameter direction of the cylinder part is provided. At the outer peripheral edge of the membrane part 44, a fastening part 46 formed with a male thread 45 at its outer circumference is provided. The top part of the thick part 43 is connected to a connecting part 41 of a bottom rod 40 of the piston 34, while the bottom part of the thick part 43 is provided with an engaging part 47 with which a projecting part 54 of a later explained spring retainer 53 engages. Further, a fastening part 46 of the first diaphragm part 42 is fastened by screwing with a female thread 10 formed at an inner circumference of the through hole 9 of the bottom body 2.

48 is a PTFE second diaphragm part. At the center, a columnar thick part is provided. A ring shaped membrane part 60 extending from the top end face of the thick part 49 to the outer diameter direction of the top end face is provided. At the outer peripheral edge of the membrane part 50, a fastening part 52 with a male thread 51 formed at its outer circumference is provided. The bottom part of the thick part 49 is connected to a connecting part 39 of a top rod 38 of the piston 34. Further, a fastening part 52 of the second diaphragm part 48 is fastened by screwing with a female thread 16 formed at an inner circumference of the through hole 15 of the top part of the top body 3.

53 is a PVDF spring retainer arranged inside the recess 31 of the base 6. The spring retainer 53 is provided at its top part with a projecting part 54 for engagement with an engagement part 47 of the first diaphragm part 42. By holding an SUS spring 55 between the floor part of the recess 41 of the base 6 and the spring retainer 53, the first diaphragm part 42 is biased in the upward direction at all times.

By the configurations explained above, the inside of the main body 1 is divided into a second pressurizing chamber 29 formed from the inner surface of the bottom step part 28 of the lid 5, the inner surface of the top step part 14 of the top body 3, and the top surface of the second diaphragm part 48; a third valve chamber 27 formed from the inner surface of the recess 13 of the top body 3 and the bottom surface of the second diaphragm part 48; a second valve chamber 26 formed from the inner surface of the cylinder part 24 and the top surface of the flange 19 of the piston 34; a first valve chamber 25 formed from an inner surface of the cylinder part 24, a bottom surface of the flange 19 of the piston 34, and a top surface of the first diaphragm part 42; and a first pressurizing chamber 32 formed from the inner surface of the recess 31 of the base 6 and the bottom surface of the first diaphragm part 42. Further, third valve chamber 27 communicates a second channel 17 and a ceiling surface opening 22, the second valve chamber 26 communicates with the ceiling surface opening 22, the first valve chamber 25 communicates with the first channel 11, and the first valve chamber 25 and the second valve chamber 26 communicate through the clearance channel 37.

The operation of the constant flow valve of the first embodiment configured as explained above is as follows:
The fluid flowing in from the first opening 2a of the main body 1 through the first channel 11 to the first valve chamber 25 passes through the clearance channel 37 whereby it is reduced in pressure and then flows into the second valve chamber 26. The fluid runs from the second valve chamber 26 through the fluid control part 56 and flows into the third valve chamber 27 during which time it is again reduced in pressure by the pressure loss of the fluid control part 56, then passes through the second channel 17 and flows out from the second opening 3a. Here, the channel area of the clearance channel 37 is set sufficiently smaller than the pressure receiving area by which the flange 35 or the piston 34 is biased upward, so the flow rate through the constant flow valve is determined by the pressure difference before and after the clearance channel 37. That is, if the pressure difference is large, the flow rate becomes larger, while if the pressure difference is small, the flow rate becomes smaller.

At this time, if looking at the forces received by the piston 34 and the diaphragm parts 42, 48 from the fluid, the flange 35 of the piston 34 receives an upward direction force due to the pressure difference of the fluids of the first valve chamber 25 and second valve chamber 26, the first diaphragm part 42 receives a downward direction force due to the fluid pressure of the first valve chamber 25, and the second diaphragm part 48 receives the upward direction force due to the fluid pressure of the third valve chamber 27. Here, the pressure receiving areas of the first and second diaphragm parts 42, 48 are set sufficiently smaller than the pressure receiving area of the flange 35 of the piston 34. The forces acting on the first and second diaphragm parts 42, 48 can be almost ignored compared with the force acting on the flange 35 of the piston 34. Therefore, the forces which the piston 34 and the diaphragm parts 42, 48 receive from the fluid become the upward direction force due to the difference of fluid pressures of the first valve chamber 25 and second valve chamber 26.

Further, the piston 34 and the diaphragm parts 42, 48 are biased downward by the supply of pressurized fluid, that is, compressed air, to the second pressurizing chamber 29. Simultaneously, they are biased upward by the spring 55 of the first pressurizing chamber 32. At this time, the pressure of the second valve chamber 26 is autonomously adjusted by the channel area of the fluid control part 56 so that at the piston 34 and the diaphragm parts 42, 48, the composite force of the biasing forces by the biasing means of the first pressurizing chamber 32 and second pressurizing chamber 29 and the force due to the difference in fluid pressures inside the first valve chamber 25 and the second valve chamber 26 balance. For this reason, if there is no change in the composite force of the biasing forces by the biasing means, the difference in fluid pressures of the first valve chamber 25 and second valve chamber 26 becomes constant and the differential pressure before and after the clearance channel 37 is held constant, so the flow rate through the constant flow valve is held constant at all times.

Here, the operation in the case where the upstream side or downstream side fluid pressure of the constant flow valve changes will be explained.

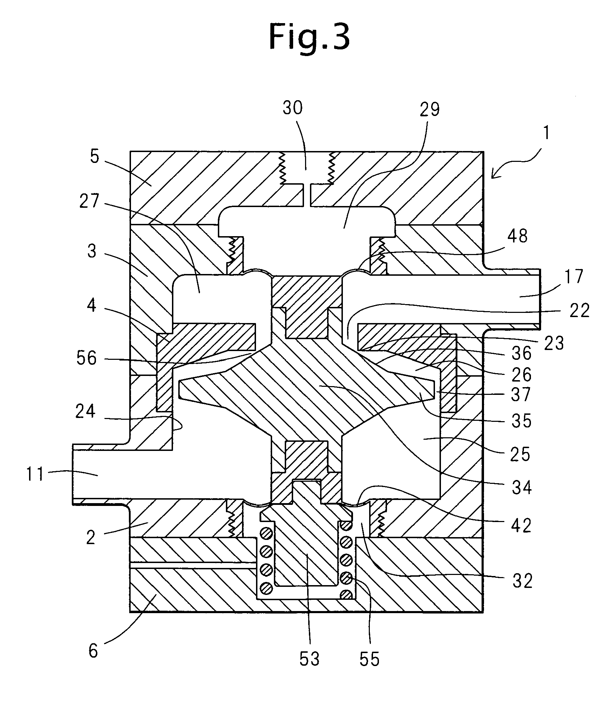

When the upstream side fluid pressure of the constant flow valve is increased, the pressure of the first valve chamber 25 is increased and becomes larger than the pressure of the second valve chamber 26, and the fluid pressure received by the flange 35 of the piston 34 causes the piston 34 to move upward (state of FIG. 3). At this time, the channel area of the fluid control part 56 is reduced and the fluid pressure of the second valve chamber 26 is increased. For this reason, the fluid pressures of the first valve chamber 25 and the second valve chamber 26 are held the same as before an increase of the upstream side fluid pressure, whereby the flow rate is held constant unchanged from before any change of the fluid pressure.

Further, when the downstream side fluid pressure of the constant flow valve is reduced, the fluid pressure of the third valve chamber 27 is reduced, whereby the pressure of the second valve chamber 26 is reduced, the pressure of the first valve chamber 25 becomes larger than the pressure of the second valve chamber 26, and the fluid pressure received by the flange 35 of the piston 34 causes the piston 34 to move upward (state of FIG. 3). At this time, the channel area of the fluid control part 56 is reduced and the fluid pressure of the second valve chamber 26 is increased. For this reason, the fluid pressures of the first valve chamber 25 and the second valve chamber 26 are held the same as before any change of the downstream side fluid pressure, whereby the flow rate is held constant unchanged from before any change of the fluid pressure.

Further, when the upstream side fluid pressure of the constant flow valve is reduced, the pressure of the first valve chamber 25 becomes smaller than the pressure of the second valve chamber 26 and the fluid pressure which the flange 35 of the piston 34 receives causes the piston 34 to move downward (state of FIG. 1). At this time, the channel area of the fluid control part 56 increases and the fluid pressure of the second valve chamber 26 is reduced. For this reason, the fluid pressures of the first valve chamber 25 and second valve chamber 26 are held the same as before the upstream side fluid pressure was reduced, so the flow rate is held constant unchanged from before any change of the fluid pressure.

Further, when the downstream side fluid pressure of the constant flow valve is increased, the fluid pressure of the third valve chamber 27 is increased, whereby the pressure of the second valve chamber 26 increases, the pressure of the first valve chamber 25 becomes smaller than the pressure of the second valve chamber 26, and the fluid pressure which the flange 35 of the piston 34 receives causes the piston 34 to move downward (state of FIG. 1). At this time, the channel area of the fluid control part 56 increases and the fluid pressure of the second valve chamber 26 is reduced. For this reason, the fluid pressures of the first valve chamber 25 and second valve chamber 26 are held the same as before the downstream side fluid pressure was increased, so the flow rate is held constant unchanged from before any change of the fluid pressure.

Here, the operation at the time of changing the pressure of the compressed air supplied to the second pressurizing chamber 29 will be explained.

When making the pressure of the compressed air supplied to the second pressurizing chamber 29 higher, compared with the force of the spring 55 of the first pressurizing chamber 32 biasing the piston 34 upward by a certain force, the force biasing the piston 34 downward due to the supply of compressed air to the second pressurizing chamber 29 becomes larger, so the piston 34 moves downward. Therefore, the channel area of the fluid control part 56 becomes larger and the fluid pressure of the second valve chamber 26 becomes lower. For this reason, the differential pressure before and after the clearance channel 37 becomes larger and the flow rate becomes larger.

When making the pressure of the compressed air supplied to the second pressurizing chamber 29 low, compared with the force of the spring 55 of the first pressurizing chamber 32 biasing the piston 34 upward by a constant force, the force biasing the piston 34 downward by supplying compressed air to the second pressurizing chamber 29 becomes smaller, so the piston 34 moves upward. Therefore, the channel area of the fluid control part 56 becomes smaller and the fluid pressure of the second valve chamber 26 becomes higher. For this reason, the differential pressure before and after the clearance channel 37 becomes smaller and the flow rate becomes smaller.

As explained above, the constant flow valve of the first embodiment can make the inflowing fluid flow out by a constant flow rate at all times. Further, when the upstream side or downstream side fluid pressure of the constant flow valve changes and adjustment is performed, for example, it is possible to obtain a constant flow rate at all times even if a pulsating fluid is carried. Further, if the pressure of the compressed air supplied to the second pressurizing chamber is raised, the flow rate becomes larger, while if the pressure is lowered, the flow rate becomes smaller, so by adjusting the pressure of the compressed air, it is possible to set the flowing fluid to any flow rate. Further, the configuration of the present invention uses as the part receiving the fluid pressure and controlling the fluid not a diaphragm, but a piston, so it is possible to obtain a constant flow rate at all times with good precision and response of fluid control in a large size constant flow valve for a large flow rate.

Further, in the present embodiment, the peripheral edge of the ceiling surface of the cylinder part 24 is formed to a tapered surface 21 whereby the fluid flows around the outer circumference of the piston 34 inside the second valve chamber 26. Therefore, it is possible to suppress stagnation of the fluid to the minimum limit and possible to prevent the generation of particles etc. Similarly, the resistance to the flow of the fluid becomes smaller, so it is possible to perform the operation for making the flow rate constant by the constant flow valve more precisely. At this time, the tapered surface 21 is preferably provided parallel to, or at an angle close to parallel to, the tapered surface of the valve element 36.

Further, the spring 55 is arranged in the first pressurizing chamber 32 and is completely isolated from the fluid by the first diaphragm part 42, so it is possible to prevent the fluid from causing the spring 55 to corrode. Also, when using pure water or another liquid resistant to generation of particles for the fluid, since the spring 55 is isolated from the fluid, it is possible to prevent the spring 55 from generating dust resulting in particles entering the fluid or metal from eluting out into the fluid.

### Second Embodiment

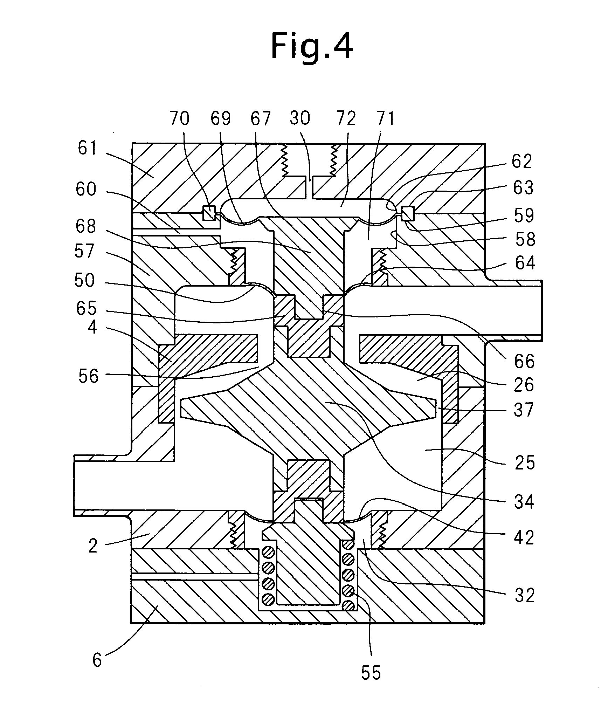

Next, a second embodiment of a constant flow valve of the present invention will be explained based on FIG. 4.

The explanation of the structure of the constant flow valve of the second embodiment will be omitted since the configurations of the center body 4, bottom body 2, base 6, piston 34, first diaphragm part 42, and first pressurizing chamber 32 are similar to the first embodiment. Component elements similar to the first embodiment are assigned the same notations.

57 is a top body. At the top part, a flat circular shaped top step part 58 is provided. At the peripheral edge of the top surface part of the top body 57, that is, the top step part 58, a ring-shaped groove 59 is provided. At a side surface of the top body 57, a breather hole 60 communicating with the top step part 58 is provided. 61 is a lid. At the bottom part, a flat circular shaped bottom step part 62 with a diameter the same as the top step part 58 of the top body 57 is provided. At the bottom surface part of the lid 61, that is, the peripheral edge of the bottom step part 62, a ring-shaped groove 63 is provided. 64 is a second diaphragm part. At the top part of the thick part 65, a connecting part 66 to which a later explained third diaphragm part 67 is connected is provided. The rest of the configuration of the top body 57, lid 61, and second diaphragm part 64 is similar to that of the first embodiment, so the explanation will be omitted.

67 is a PTFE third diaphragm part. At its center, a columnar thick part 68 is provided. A ring shaped membrane part 69 extending from the top end face of the thick part 68 to the outer diameter direction of the cylinder part is provided. At the outer peripheral edge of the membrane part 69, a fastening part 70 is provided. Here, the area of the membrane part 68 is set to become larger than the area of the membrane part 50 of the second diaphragm part 64. The third diaphragm part 67 is gripped and fastened between the top body 57 and the lid 61 by the fastening part 70 being engaged with the ring-shaped groove 59 of the top body 57 and the ring-shaped groove 63 of the lid 61. The bottom part of the thick part 68 is connected to the connecting part 66 of the second diaphragm part 64.

Due to the above configuration, an air chamber 71 is formed by the inner surface of the top step part 58 of the top body 57, the top surface of the second diaphragm part 64, and the bottom surface of the third diaphragm part 67, while a pressurizing chamber 72 is formed by the inner surface of the bottom step part 62 of the lid 6 and the top surface of the third diaphragm part 67.

The operation of the constant flow valve of the second embodiment configured in the above way is as follows:

In FIG. 4, the piston 34 and the diaphragm parts 42, 64 are biased downward by the supply of pressurized fluid, that is, compressed air, from the ventilation port 30 to the pressurizing chamber 72. Simultaneously, they are biased upward by the spring 55 of the first pressurizing chamber 32. At this time, the pressure of the second valve chamber 26 is autonomously adjusted by the channel area of the fluid control part 56 so that, at the piston 34 and the diaphragm parts 42, 64, the composite force of the biasing forces of the biasing means of the first pressurizing chamber 32 and the pressurizing chamber 72 and the force due to the difference in fluid pressures in the first valve chamber 25 and second valve chamber 26 become balanced. For this reason, if there is no change in the composite force biased by the biasing means, the difference in fluid pressures inside the first valve chamber 25 and second valve chamber 26 becomes constant. The differential pressure before and after the clearance channel 37 is held constant, so the flow rate through the constant flow valve is held constant at all times.

In the second embodiment, the area of the membrane part 68 of the third diaphragm part 67 is larger than the area of the membrane part 50 of the second diaphragm part 64 and the pressure receiving area of the third diaphragm part 67 is formed larger than the pressure receiving area of the second diaphragm part 64, so when the same pressure acts on the diaphragm parts, the biasing force due to the third diaphragm part 67 receiving the pressure becomes larger than the biasing force due to the second diaphragm part 64 receiving the pressure.

Here, the second embodiment having the third diaphragm part 67 and the first embodiment not having the third diaphragm part will be compared. In the configuration of the first embodiment, if the fluid flowing through the constant flow valve is a high fluid pressure, to make the flow rate constant, the compressed air supplied to the second pressurizing chamber 29 has to be a pressure equal to the fluid pressure. To obtain a high pressure compressed air, special facilities are required. Further, there are limits to raising the pressure. Therefore, the first embodiment is suited to low pressure specifications, but is not suited to high pressure specifications. In the configuration of the second embodiment, the ratio of the pressure receiving area of the second diaphragm part 64 and the pressure receiving area of the third diaphragm part 67 is set in accordance with the relationship between the pressure of the compressed air supplied and the pressure of the fluid flowing through the constant flow valve, so even if the pressure of the fluid flowing through the constant flow valve is high, fluid control is possible by supplying compressed air to the pressurizing chamber by the pressure generally used in factories or apparatuses etc., so the second embodiment is suited to high pressure specifications. The operation when the upstream side or downstream side fluid pressure of the constant flow valve of the second embodiment changes and the operation when changing the pressure of the compressed air supplied to the pressurizing chamber 72 are similar to the first embodiment, so explanations will be omitted.

In the above way, the constant flow valve of the second embodiment can make the inflowing fluid flow out by a constant flow rate at all times. Even when the upstream side or downstream side fluid pressure of the constant flow valve changes and increases or decreases, it is possible to obtain a constant flow rate at all times. By adjusting the compressed air, it is possible to set the fluid to any flow rate. Further, the valve can operate even when the pressure of the compressed air supplied to the pressurizing chamber is low, so even if the pressure of the fluid flowing through the constant flow valve is high, the compressed air supplied to the pressurizing chamber enables operation at a low pressure for fluid control, so fluid control over a wide range of fluid pressure is possible.

### Third Embodiment

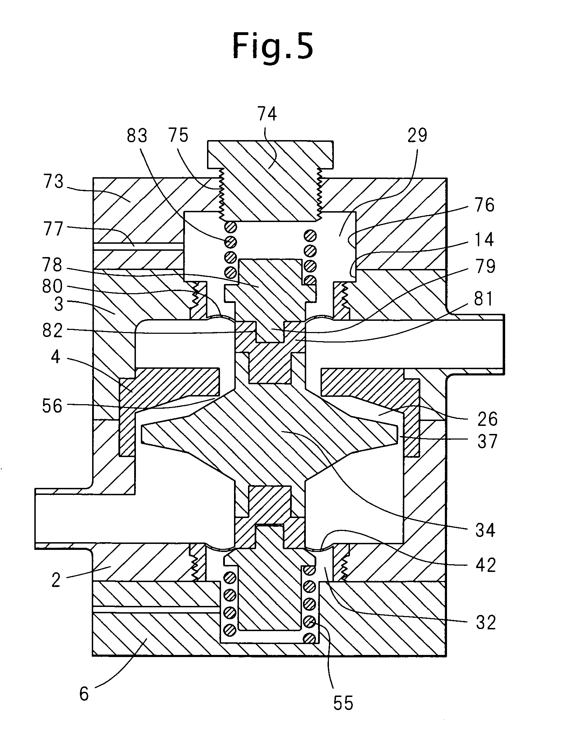

Next, a third embodiment of a constant flow valve of the present invention will be explained based on FIG. 5.

The explanation of the structure of the constant flow valve of the third embodiment will be omitted since the configuration of the top body 3, center body 4, bottom body 2, base 6, piston 34, first diaphragm part 42, and first pressurizing chamber 32 is similar to that of the first embodiment. Component elements similar to the first embodiment are assigned the same notations.

73 is a lid. At the center of its top part, a female thread 75 with which a bolt 74 is screwed is provided. At the bottom part, a flat circular shaped bottom step part 76 of the same diameter as the top step part 14 of the top body 3 is provided. At the side surface of the lid 73, a small diameter breathing hole 77 communicating with the bottom step part 76 is provided. 78 is a spring retainer arranged inside the bottom step part 76 of the lid 73. At the bottom part, a projecting part 79 is provided. The projecting part 79 engages with an engagement part 82 formed at the top part of a thick part 81 of a second diaphragm part 80. The spring 83 arranged between the spring retainer 78 and the bottom surface of the bolt 75 screwed with the female thread 75 of the lid 73 biases the second diaphragm part 80 downward at all times. The rest of the configuration of the lid 73 and the second diaphragm part 80 is similar to that of the first embodiment, so the explanation will be omitted.

The operation of the constant flow valve of the third embodiment configured in the above way is as follows:
If making the bolt 74 turn in the fastening direction, the spring 83 of the second pressurizing chamber 29 is compressed and the biasing force becomes larger. Compared with the force of the spring 55 of the first pressurizing chamber 32 biasing the piston 34 upward by a constant force, the force of the spring 83 of the second pressurizing chamber 29 biasing the piston 34 downward becomes larger, so the piston 34 moves downward. Therefore, the channel area of the fluid control part 56 becomes larger and the fluid pressure of the second valve chamber 26 becomes lower. For this reason the differential pressure before and after the clearance channel 37 becomes larger and the flow rate can be increased.

If the bolt 74 is turned in the loosening direction, the spring 83 of the second pressurizing chamber 29 will extend and the biasing force will become smaller. Compared to the force of the spring 55 of the first pressurizing chamber 32 biasing the piston 34 upward by a constant force, the force of the spring 83 of the second pressurizing chamber 29 biasing the piston 34 downward becomes smaller, so the piston 34 moves upward. Therefore, the channel area of the fluid control part 56 becomes smaller and the fluid pressure of the second valve chamber 26 becomes higher. For this reason, the differential pressure before and after the clearance channel 37 becomes smaller and the flow rate can be made smaller. The rest of the operation of the third embodiment is similar to that of the first embodiment, so the explanation will be omitted.

In the above way, the constant flow valve of the third embodiment can make the inflowing fluid flow out by a constant flow rate at all times. Further, when the upstream side or downstream side fluid pressure of the constant flow valve changes and adjustment is performed, it is possible to obtain a constant flow rate at all times. Further, by adjusting the fastening position of the bolt 74, the flowing fluid can be set to any flow rate. Further, in the third embodiment, the biasing means is only a spring. There is no need to provide a facility for supplying compressed air etc.

### Fourth Embodiment

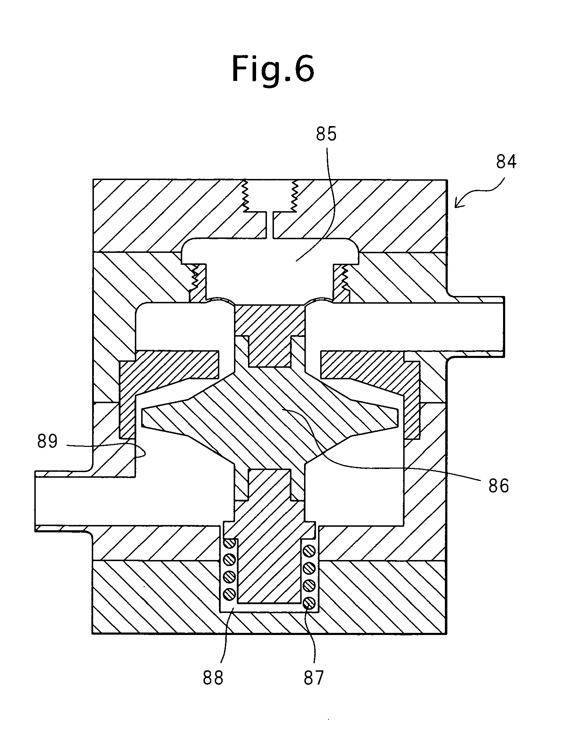

Here, when the fluid is a non-corrosive gas, it is also possible to provide a pressurizing chamber 85 at the top part of the inside of the main body 84 as shown in FIG. 6 to supply pressurized fluid and thereby bias the piston 86 downward, to provide a spring 87 at the bottom part to bias the piston 86 upward, and not provide a diaphragm part at the space 88 providing the spring 87, but communicate it with the cylinder part 89 and adjust the pressure of the pressurized fluid supplied to the pressurizing chamber 85 to set the fluid to any flow rate.

### Fifth Embodiment

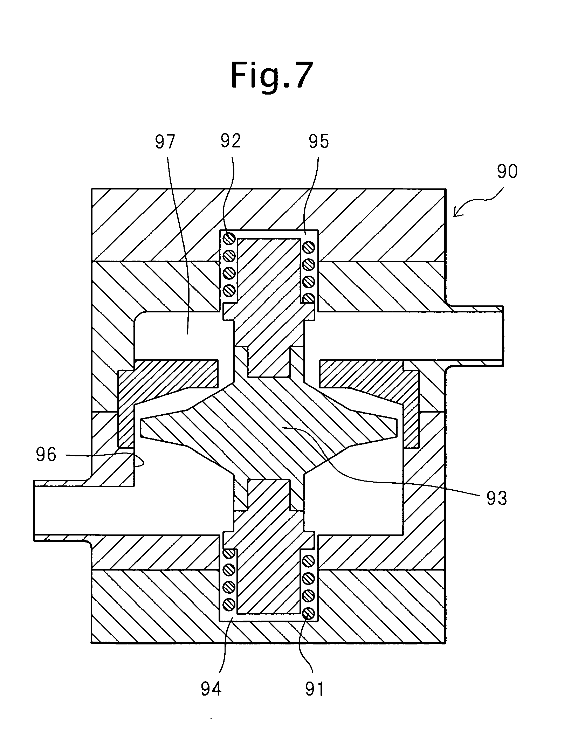

Further, it is also possible to provide a spring 92 at the top part of the inside of the main body 90 as shown in FIG. 7 to bias the piston 93 downward, provide a spring 91 at the bottom part to bias the piston 93 upward, not provide a diaphragm part in the space 95 providing the spring 92, but communicate it with a third valve chamber 97, and not to provide a diaphragm part in the space 94 providing the spring 91, but communicate it with a cylinder part 96 so as to make the flow rate of the fluid constant at all times without requiring facilities for supplying the pressurized fluid etc. At this time, the structure of the constant flow valve becomes simpler and the parts become resistant to breakage and also the number of parts becomes smaller and the trouble in assembly can be reduced, so this is preferred.

### Other Embodiments

Further, when the fluid is a liquid or a corrosive gas, as shown in FIG. 1, pressurizing chambers 29, 32 formed by diaphragm parts 42, 48 are provided at the top part and bottom part of the inside of the main body 1. It is also possible to supply the pressurized fluid to the second pressurizing chamber 29, set a spring 55 in the first pressurizing chamber 32, and bias the piston 34 upward or downward. At this time, the liquid or corrosive gas does not directly contact the spring 55. The spring is completely isolated from the fluid. Therefore, corrosion of the spring 55 is prevented. Furthermore, in the case of a liquid, it is possible to prevent the spring 55 from generating dust and the particles from entering the liquid or metal from eluting into the liquid.

The present invention preferably forms the peripheral edge of the ceiling surface of the cylinder part 24 as a tapered surface 21. This is preferable because when the fluid runs from the first valve chamber 25 through the clearance channel 37 to flow to the second valve chamber 26, then runs from the second valve chamber 26 through the ceiling surface opening 22 and flows to the third valve chamber 27, the fluid flows around the outer circumference of the piston 34 inside the second valve chamber 26, so stagnation of fluid is kept to the minimum limit, generation of particles etc. is suppressed, and the resistance to the flow of fluid is reduced, so the operation for making the flow rate constant by a constant flow valve is performed accurately.

Further, the inner circumference of the cylinder part 24 has to be a surface parallel to the axial line. Due to this, even if the piston 34 moves up or down, the area of the clearance channel 37 will always become constant and stable fluid control will be performed.

In the present invention, the diaphragm parts 42, 48, and 67 are made of polytetrafluoroethylene (hereinafter referred to as "PTFE"), but polychlorotrifluoroethylene ((hereinafter referred to as "PCTFE"), polyvinylidene fluoride (hereinafter referred to as "PVDF"), tetrafluoroethylene-perfluoroalkylvinyl ether copolymer (hereinafter referred to as "PFA"), and other fluororesins with good repeated fatigue characteristics may be mentioned as particularly preferable. Ethylene propylene rubber, nitrile rubber, styrene butadiene rubber, fluororubber, and other rubbers are also possible. Further, when the diaphragm parts 42, 48, 67 are rubber, high strength reinforcing fabrics of vinylon, nylon, polyester, etc. may also be included.

In the present invention, the lid 5, top body 3, center body 4, bottom body 2, and base 6 forming the main body 1 and the piston 34 are made of PTFE, but if the necessary physical properties are satisfied, polyvinyl chloride, polypropylene, polyphenylene sulfide, PVDF, PCTFE, PFA, etc. may also be used. If there is no concern over corrosion, a metal may also be used.

In the present invention, the biasing means is preferably a spring 55 or a pressurized fluid. If the biasing means is a spring 55, it is provided at the top part or bottom part in the main body 1 to bias the piston 34 upward or downward. It is possible to bias it by a constant force at all times without requiring other facilities, so is preferable. If the biasing means is a pressurized fluid, the means is provided to supply pressurized fluid to the pressurizing chamber 29, 32 formed with the diaphragm parts 42, 43 at the top part or bottom part of the inside of the main body 1 to bias the piston 34 upward or downward. It is possible to adjust the pressure of the pressurized fluid to set the flowing fluid to any flow rate, so this is preferable. Note that as the pressurized fluid, compressed air or another gas or compressed oil or another liquid may be mentioned as preferable.

The fluid flowing through the constant flow valve of the present invention may be any fluid which can be controlled by aconstant flow valve without problem. Any of pure water, hydrochloric acid, ammonia water, hydrogen peroxide, hydrofluoric acid, ammonium fluoride, or another liquid or air, oxygen, nitrogen, gas, or another gas may be used.

The constant flow valve of the present invention makes the fluid flow in from the first opening, pass through the first channel and second channel, and flow out from the second opening (solid line arrow direction in FIG. 1), but it is also possible to use it so as to reverse the flow. That is, it is possible to use it to make the fluid flow in from the second opening, pass through the second channel and first channel, and flow out from the first opening (broken line arrow direction of FIG. 1).

Note that the present invention was described based on specific embodiments, but a person skilled in the art could made various changes, modifications, etc. without departing from the claims and concept of the present invention.

## Claims

1. A constant flow valve provided with
a main body provided with a cylinder part, a first channel communicating from a first opening to said cylinder part, a second channel communicating from said cylinder part to a second opening and
a piston accommodated in said cylinder part,
said constant flow valve **characterized in that**
said main body has a valve seat at a peripheral edge of a ceiling surface opening provided at said cylinder part ceiling surface, said piston has a valve element corresponding to said valve seat and a flange,
said flange divides said cylinder part into a first valve chamber communicating with said first channel and a second valve chamber from which said valve seat is exposed, a clearance channel is formed in a clearance between said flange outer circumference and said cylinder part inner circumference, and an upward and downward motion of said piston causes a channel area between said valve element and said valve seat to change whereby a fluid pressure of said second valve chamber is controlled.

2. A constant flow valve as set forth in claim 1, further provided with a biasing means for biasing said piston upward by a predetermined force and a biasing means for biasing said piston downward by a predetermined force.

3. A constant flow valve as set forth in claim 1, wherein a bottom part of said piston at the center part of which said flange is formed is provided with a first diaphragm part extending in said cylinder part outer diameter direction, and there is a first pressurizing chamber formed by an inner surface of a recess provided in a top surface of a base provided at the bottom part of said main body and a bottom surface of said first diaphragm part.

4. A constant flow valve as set forth in claim 1, wherein a top part of said piston at the center part of which said flange is formed is provided with a second diaphragm part extending in said cylinder part outer diameter direction, below said second diaphragm part, there is a third valve chamber communicating from said ceiling surface opening to said second channel, and there is a second pressurizing chamber formed by an inner surface of a recess formed in a bottom surface of a lid provided at a top part of said main body and a top surface of said second diaphragm part.

5. A constant flow valve as set forth in claim 4, wherein above said second diaphragm part, a third diaphragm part extending in said cylinder part outer diameter direction is provided, and said second pressurizing chamber is divided by said third diaphragm part into an air chamber formed between a top surface of said second diaphragm part and a bottom surface of said third diaphragm part and a pressurizing chamber formed by a top surface of said third diaphragm part and an inner surface of a recess provided in a bottom surface of said lid.

6. A constant flow valve as set forth in claim 1, wherein said biasing means is a spring or pressurized fluid.

7. A constant flow valve as set forth in claim 1, wherein at least part of a ceiling surface of said cylinder part is formed into a tapered surface.
